# FASCICULE DE BREVET EUROPEEN

(11) **EP 4 608 718 B1**
(45) Date de publication et mention de la délivrance du brevet: **02.09.2026**
(21) Numéro de dépôt: 23817188.8
(22) Date de dépôt: 27.10.2023
(51) Int. Cl.: B64C 11/38, B64C 11/06, B64D 27/00

(54) **MECANISME DE CHANGEMENT DE PAS AVEC DISPOSITIF DE VERROUILLAGE DE PAS EN PORTE-A-FAUX**
NEIGUNGSÄNDERUNGSMECHANISMUS MIT FREITRAGENDER NEIGUNGSVERRIEGELUNGSVORRICHTUNG
PITCH-CHANGE MECHANISM WITH CANTILEVERED PITCH-LOCKING DEVICE

(30) Priorité: 28.10.2022 FR 2211292
(43) Date de publication de la demande: 03.09.2025
(73) Titulaire: SAFRAN AIRCRAFT ENGINES, 75015 Paris (FR)
(72) Inventeur: PERDRIGEON, Christophe Marcel Lucien, 77550 MOISSY-CRAMAYEL (FR); COTTET, Clément, 77550 MOISSY-CRAMAYEL (FR); SERVANT, Régis Eugène Henri, 77550 MOISSY-CRAMAYEL (FR); RODA, Jean Charles Olivier, 77550 MOISSY-CRAMAYEL (FR)
(74) Mandataire: Regimbeau
(86) Numéro de dépôt international: PCT/FR2023/051700
(87) Numéro de publication internationale: WO 2024/089375

(56) Documents cités:
- EP-A2- 1 832 509
- US-A- 2 855 057
- US-A- 5 141 399
- US-A- 5 161 948

## Description

### DOMAINE DE L'INVENTION

La présente invention concerne le domaine général des turbomachines équipées d'au moins une soufflante dotée d'aubes à calage variable, et plus particulièrement à la commande de l'orientation des pales de soufflante de ces turbomachines.

Un domaine privilégié d'application de l'invention est celui des turboréacteurs à soufflante non carénée (mieux connus sous les appellations anglaises « propfan », « open fan », « open rotor » et « unducted fan »). Toutefois, l'invention s'applique également aux turbopropulseurs à une ou plusieurs hélices propulsives.

### ARRIERE-PLAN TECHNOLOGIQUE

Une des voies actuellement explorées pour améliorer la consommation spécifique des moteurs d'avions civils est constituée par la mise au point de turboréacteurs à soufflante non carénée, tels que celui décrit dans le document FR 2 941 493. Ces turboréacteurs comportent un générateur de gaz de turbomoteur classique, dont un ou plusieurs étages de turbine entraînent une ou plusieurs soufflante(s) non carénée(s) s'étendant à l'extérieur de la nacelle du moteur.

Les aubes de cette ou de ces soufflante(s) sont, comme dans le cas des turbopropulseurs classiques, à calage variable, c'est à dire que la position angulaire de ces aubes (appelée angle de calage) peut être modifiée au cours du vol. Pour rappel, l'angle de calage d'une aube correspond à l'angle, dans un plan orthogonal à l'axe de pivotement de l'aube, entre l'axe de rotation de la soufflante et la corde de l'aube à 75% du rayon de la soufflante. Il peut varier d'une valeur égale à 90°, correspondant à une position dite « voile » ou « à plat » de l'aube, à une valeur égale à 0° , correspondant à une position dite « drapeau » de l'aube. Il peut également prendre une valeur strictement supérieure à 90°, typiquement sensiblement égale à 95°, correspondant à une position dite « reverse » de l'aube.

Comme il est connu, cette modification de l'angle de calage au cours du vol permet de faire évoluer la poussée du moteur et optimiser le rendement de la soufflante en fonction de la vitesse de l'aéronef. En effet, le régime des soufflantes est quasiment constant sur toutes les phases de fonctionnement, et c'est le calage des aubes qui fait varier la poussée. Ainsi, en phase de vol de croisière, les aubes sont orientées de sorte à ajuster la poussée en minimisant la puissance prélevée sur l'arbre de turbine et la consommation et en optimisant le rendement. A l'inverse, au décollage, les aubes sont orientées de sorte à maximiser la poussée afin d'accélérer puis de faire décoller l'avion.

Le pilotage de l'orientation des aubes est communément réalisé au moyen d'un mécanisme de changement de pas comprenant un vérin de commande comportant une partie mobile en translation suivant l'axe de la soufflante et un système de liaison reliant la partie mobile à l'aube de sorte à convertir la translation de la partie mobile en rotation de l'aube à calage variable.

Une difficulté rencontrée avec les aubes à calage variable est que, en cas de dysfonctionnement des systèmes pilotant leur orientation, lesdites aubes ont tendance, sous leur propre effet centrifuge, à se mettre en position voile. Or, une aube bloquée dans cette position génère peu de couple résistif et risque de faire partir le moteur en survitesse, avec des risques de dégradation potentiels du moteur. Au surplus, une aube bloquée dans cette position risque également de générer une traînée excessive et inacceptable pour la contrôlabilité de l'avion et/ou son rayon d'action dans le cas d'une mission de diversion.

Pour remédier à cette difficulté, il est connu de recourir à des systèmes de sécurité aptes à s'opposer au déplacement des aubes à calage variable vers les petits pas (c'est-à-dire vers la position voile) en cas de défaillance du système de commande de l'orientation des aubes. De tels systèmes sont par exemple connus de EP 3 400 169, US 2 855 057, US 5 141 399 et US 5 161 948.

On connaît notamment un système de sécurité intégrant au vérin commandant l'orientation des aubes un système vis-écrou du type vis à billes couplé à un écrou de verrouillage. En fonctionnement normal, l'écrou du système vis-écrou suit les déplacements du vérin de commande, entraînant ainsi la rotation de la vis autour de son axe, pendant que l'écrou de verrouillage suit le filetage de la vis sans jamais la toucher (le taraudage de l'écrou de verrouillage est conçu de sorte à ménager un léger jeu avec le filetage de la vis). En cas de dysfonctionnement du système de commande de l'orientation des aubes, la vis du système vis-écrou est immobilisée (sa rotation est bloquée) et l'écrou de verrouillage vient en prise avec ladite vis, empêchant ainsi le pivotement des aubes vers les petits pas.

Ce système de sécurité ne donne cependant pas entière satisfaction. En effet, il rend difficile l'accès au système de liaison reliant l'aube à la partie mobile du vérin une fois le système de commande installé. En outre, il est complexe de l'assembler au vérin de commande. De plus, il nécessite un vérin de commande présentant une géométrie particulière le rendant lourd et encombrant. Au surplus, il requiert, pour un bon fonctionnement, une gestion précise et complexe des jeux entre l'écrou de verrouillage et le filetage de la vis.

### EXPOSE DE L'INVENTION

Un objectif de l'invention est de faciliter l'accès à un mécanisme de changement de pas pilotant l'orientation d'aubes à calage variable lorsque ledit mécanisme de changement de pas comprend un dispositif de verrouillage de pas et qu'il est assemblé à un ensemble d'aubes à calage variable. D'autres objectifs sont de permettre un allègement du mécanisme de changement de pas, de permettre une simplification du mécanisme de changement de pas, et de faciliter l'assemblage du mécanisme de changement de pas.

A cet effet, l'invention a pour objet, selon un premier aspect, un mécanisme de changement de pas selon la revendication 1.

Selon des modes de réalisation particuliers de l'invention, le mécanisme de changement de pas présente également une ou plusieurs des caractéristiques suivantes, prise(s) isolément ou suivant toute(s) combinaison(s) techniquement possible(s) :
- le dispositif de verrouillage de pas comprend :
   ∘ un organe de support, mobile en translation relativement au bâti suivant l'axe longitudinal entre une position de fonctionnement et une position de verrouillage,
   ∘ un système de guidage guidant l'organe de support relativement au bâti,
   ∘ un dispositif de rappel sollicitant l'organe de support vers sa position de verrouillage,
   ∘ un dispositif de maintien pour maintenir l'organe de support dans sa position de fonctionnement en conditions normales de fonctionnement, et
   ∘ un système vis-écrou avec :
      ▪ une vis solidaire en translation de l'organe de support et montée mobile en rotation autour de l'axe longitudinal relativement à l'organe de support, la vis présentant une surface de butée qui est à distance du bâti lorsque l'organe de support est en position de fonctionnement et en appui contre le bâti lorsque l'organe de support est en position de verrouillage, et
      ▪ un écrou solidaire de la partie mobile du vérin et coaxial à la vis, l'écrou coopérant avec la vis de sorte qu'une translation de l'écrou suivant l'axe longitudinal entraîne la rotation de la vis autour de l'axe longitudinal ;
- le vérin de commande et le système de guidage sont disposés longitudinalement d'un même côté, de préférence un côté aval, de l'écrou ;
- le mécanisme de changement de pas comprend un dispositif de guidage de l'écrou relativement au bâti, ledit dispositif de guidage comportant un cylindre interne solidaire de l'écrou et un cylindre externe solidaire du bâti, le cylindre interne coopérant avec le cylindre externe de manière à coulisser longitudinalement à l'intérieur de ce dernier ;
- le dispositif de verrouillage de pas comprend un carter solidaire de l'écrou et entourant l'écrou, la vis et l'organe de support ;
- le cylindre délimite une cavité interne et le piston divisant ladite cavité interne en deux chambres fluidiques contenant chacune un fluide de commande pour commander le déplacement de la partie mobile relativement à la partie fixe ;
- l'une des deux chambres fluidiques est en communication fluidique avec l'intérieur du carter, le fluide de commande constituant un fluide de lubrification du dispositif de verrouillage ;
- les chambres fluidiques sont fermées à chacune des extrémités longitudinales du vérin ;
- le carter délimite au moins partiellement une enceinte de circulation d'un fluide de lubrification du dispositif de verrouillage de pas ;
- le mécanisme de changement de pas comprend une étanchéité isolant fluidiquement les chambres fluidiques du dispositif de verrouillage de pas ;
- le carter comprend un cylindre interne portant l'écrou sur une face interne et coopérant avec un cylindre externe solidaire du bâti de manière à coulisser longitudinalement à l'intérieur de ce dernier, le cylindre interne présentant à sa périphérie une étanchéité en contact avec une face interne du cylindre externe, le cylindre externe et le carter délimitant ensemble une enceinte de circulation d'un fluide de lubrification du dispositif de verrouillage ;
- le système de liaison comprend une première articulation solidaire de la partie mobile, une deuxième articulation solidaire de l'aube à calage variable, à l'écart de l'axe de pivotement, et un organe de liaison reliant la première articulation à la deuxième articulation ;
- le système de liaison est propre à convertir :
   ∘ une translation de la partie mobile suivant l'axe longitudinal dans un premier sens en une rotation de l'aube à calage variable autour de l'axe de pivotement vers la position voile, et
   ∘ une translation de la partie mobile suivant l'axe longitudinal dans un deuxième sens opposé au premier sens en une rotation de l'aube à calage variable autour de l'axe de pivotement vers la position drapeau ;
- la première articulation est disposée à l'amont, respectivement à l'aval, de la deuxième articulation, le premier sens allant de l'amont vers l'aval, respectivement de l'aval vers l'amont ;
- la surface de butée est orientée dans le premier sens ;
- l'organe de support se déplace de sa position de fonctionnement à sa position de verrouillage par translation dans le premier sens ;
- l'organe de liaison est constitué par une bielle ;
- l'aube à calage variable comprend un bord d'attaque, un bord de fuite et une corde reliant le bord d'attaque au bord de fuite, la deuxième articulation étant placée à l'opposé du bord de fuite relativement à un plan orthogonal à la corde et contenant l'axe de pivotement ;
- le bâti comprend un butoir contre lequel la surface de butée de la vis vient en appui lorsque l'organe de support est en position de verrouillage, le vérin de commande et le butoir étant disposés longitudinalement d'un même côté de l'écrou ;
- le cylindre est continu ;
- les chambres fluidiques sont contigües ;
- chaque chambre fluidique est délimitée au moins en partie par une surface périphérique externe du bâti ;
- la surface de butée est ménagée à une extrémité aval de la vis, respectivement à une extrémité amont ;
- le dispositif de verrouillage de pas est hors desdites chambres fluidiques ;
- au moins une partie du dispositif de verrouillage de pas s'étend longitudinalement à l'écart du vérin ;
- le mécanisme de changement de pas comprend une virole reliant l'écrou à la partie mobile du vérin, ladite virole faisant saillie longitudinalement, en particulier vers l'amont, depuis le vérin ; et
- l'axe longitudinal est sensiblement orthogonal à l'axe de pivotement.

L'invention a également pour objet, selon un deuxième aspect, un rotor de soufflante pour turbomachine comprenant un moyeu et une pluralité d'aubes à calage variable chacune pivotable relativement au moyeu autour d'un axe de pivotement propre, le rotor comprenant en outre un mécanisme de changement de pas selon le premier aspect pour ajuster une position angulaire de chacune des aubes à calage variable autour de son axe de pivotement respectif.

Selon un mode de réalisation particulier de l'invention, le rotor de soufflante présente également la caractéristique suivante :
- l'axe longitudinal constitue un axe de rotation du rotor.

L'invention a aussi pour objet, selon un troisième aspect, une turbomachine comprenant un rotor de soufflante selon le deuxième aspect.

Selon un mode de réalisation particulier de l'invention, la turbomachine présente également la caractéristique suivante :
- l'axe longitudinal constitue un axe d'élongation de la turbomachine.

L'invention a encore pour objet, selon un quatrième aspect, un aéronef comprenant au moins une turbomachine selon le troisième aspect.

Enfin, l'invention a pour objet, selon un cinquième aspect, un procédé de changement du pas des aubes d'un rotor de soufflante pour turbomachine, chacune pivotable relativement à un moyeu du rotor de soufflante autour d'un axe de pivotement propre, ledit procédé comprenant l'ajustement d'une position angulaire de chacune desdites aubes autour de son axe de pivotement respectif au moyen d'un mécanisme de changement de pas selon le premier aspect.

Selon un mode de réalisation particulier de l'invention, le procédé présente également la caractéristique suivante :
- le procédé comprend une étape supplémentaire de verrouillage de l'orientation des aubes au moyen du dispositif de verrouillage de pas.

### BREVE DESCRIPTION DES FIGURES

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue de dessus d'un aéronef selon un exemple de réalisation de l'invention,
- la Figure 2 est une vue simplifiée en coupe longitudinale partielle d'une turbomachine de l'aéronef de la Figure 1,
- la Figure 3 est une vue simplifiée en coupe longitudinale d'une partie d'un mécanisme de changement de pas de la turbomachine de la Figure 2 selon une première variante, le mécanisme de changement de pas étant dans une première configuration,
- la Figure 4 est une vue similaire à celle de la Figure 3, le mécanisme de changement de pas étant dans une deuxième configuration,
- la Figure 5 est une vue simplifiée en coupe longitudinale d'une partie d'un mécanisme de changement de pas de la turbomachine de la Figure 2 selon une deuxième variante,
- la Figure 6 est une vue simplifiée en coupe longitudinale d'une partie d'un mécanisme de changement de pas de la turbomachine de la Figure 2 selon une troisième variante,
- la Figure 7 est une vue simplifiée en coupe longitudinale d'une partie d'un mécanisme de changement de pas de la turbomachine de la Figure 2 selon une quatrième variante,
- la Figure 8 est une vue simplifiée suivant un axe radial d'un bras de mise en rotation d'une aube à calage variable de la turbomachine de la Figure 2, et
- la Figure 9 est une vue en perspective et en coupe partielle d'une vis à rouleaux satellites du mécanisme de changement de pas de la Figure 3.

### DESCRIPTION DETAILLEE D'UN EXEMPLE DE REALISATION

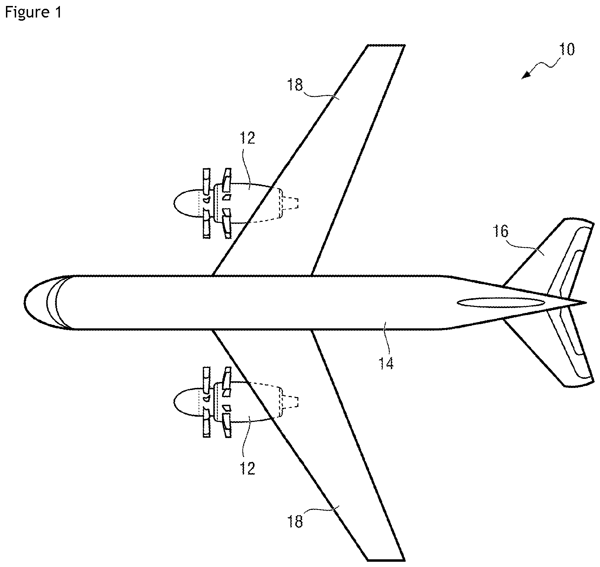

L'aéronef 10 représenté sur la Figure 1 comprend des turbomachines 12 pour le propulser.

Dans l'exemple représenté, l'aéronef 10 est un avion. Celui-ci comprend, de manière classique, un fuselage 14, un empennage 16 et deux ailes 18. Les turbomachines 12 sont ici au nombre de deux et sont chacune logées sous une aile 18 respective. En variante (non représentée), les turbomachines 12 sont disposées le long du fuselage 14, par exemple à proximité de l'empennage 16. En variante encore (également non représentée), l'aéronef 10 comprend une seule turbomachine 12 ou au moins trois turbomachines 12.

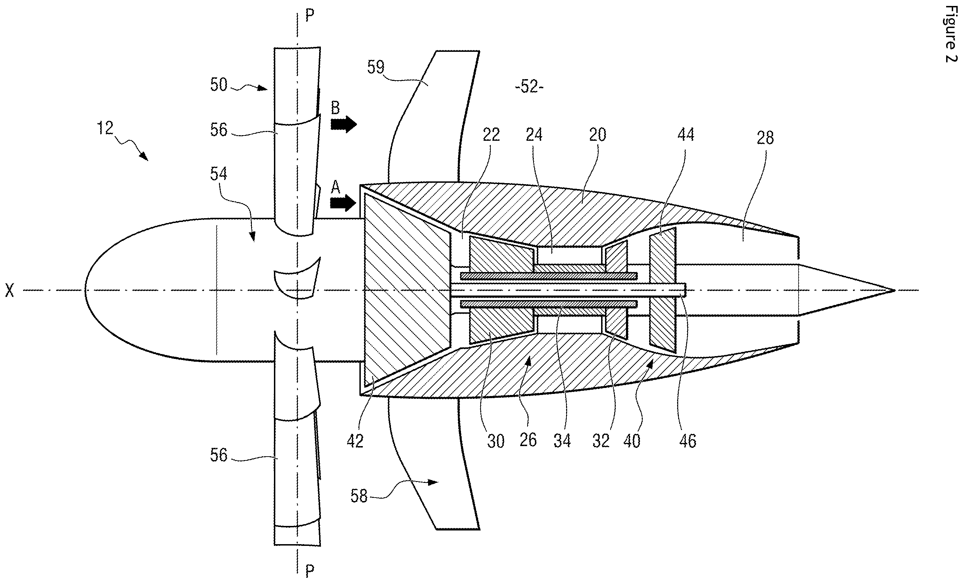

L'une des turbomachines 12 est représentée sur la Figure 2.

Comme visible sur cette Figure 2, la turbomachine 12 est allongée suivant un axe longitudinal X. Elle présente typiquement une symétrie angulaire autour dudit axe longitudinal X, c'est-à-dire qu'il existe au moins un angle pour lequel la turbomachine est invariante par rotation autour de l'axe longitudinal X.

Ici et dans la suite, les termes « intérieur » et « extérieur », « interne » et « externe », ainsi que leurs déclinaisons, s'entendent en référence à l'axe X, un élément qualifié de « intérieur » ou « interne » étant orienté vers l'axe X alors qu'un élément « extérieur » ou « externe » est orienté à l'opposé de l'axe X.

La turbomachine 12 comprend, de manière classique, une nacelle 20, une veine interne 22 de circulation d'un flux d'air à travers la nacelle 20, une chambre de combustion 24 logée dans la veine 22, un corps moteur 26 et une tuyère d'échappement des gaz 28.

Dans la suite, les termes « amont » et « aval » s'entendent en référence à un sens d'écoulement d'un flux d'air à travers la veine 22.

Le corps moteur 26 comprend un compresseur 30, une turbine 32 et un arbre de transmission 34 couplant la turbine 32 au compresseur 30 pour l'entraînement du compresseur 30 par la turbine 32. Le compresseur 30 est disposé en amont de la chambre de combustion 24 et alimente la chambre de combustion 24 en air comprimé. La turbine 32 est disposée en aval de la chambre de combustion 24 et reçoit les gaz d'échappement sortant de la chambre de combustion 24.

L'arbre de transmission 34 a pour axe de rotation l'axe longitudinal X.

L'arbre de transmission 34 est guidé en rotation par rapport à la nacelle 20 par le biais de paliers (non représentés).

Dans l'exemple représenté, la turbomachine 12 est une turbomachine à multiples corps, en particulier à double corps, comprenant un corps basse pression 40 en plus du corps moteur 26. Le corps moteur 26 constitue alors un corps haute pression, le compresseur 30 étant un compresseur haute pression, la turbine 32 étant une turbine haute pression et l'arbre de transmission 34 étant un arbre haute pression.

Le corps basse pression 40 comprend un compresseur basse pression 42, une turbine basse pression 44 et un arbre basse pression 46 couplant la turbine basse pression 44 au compresseur basse pression 42 pour l'entraînement du compresseur basse pression 42 par la turbine basse pression 44.

Le compresseur basse pression 42 est disposé en amont du compresseur haute pression 30 et alimente ce dernier en air comprimé. La turbine basse pression 44 est disposée en aval de la turbine haute pression 32 et reçoit les gaz d'échappement sortant de cette dernière.

L'arbre basse pression 46 est guidé en rotation par rapport à la nacelle 20 par le biais de paliers (non représentés).

L'arbre basse pression 46 est coaxial à l'arbre haute pression 34. Il a donc également pour axe de rotation l'axe longitudinal X. En particulier, l'arbre basse pression 46 s'étend à l'intérieur de l'arbre haute pression 34.

La turbomachine 12 comprend également une soufflante 50 pour entraîner le flux d'air dans une veine de circulation externe 52 entourant la nacelle 20. On distingue ainsi un flux d'air primaire A (chaud), constitué par la portion du flux d'air entraînée dans la veine de circulation interne 22, et un flux d'air secondaire B (froid), constitué par la portion du flux d'air entraînée dans la veine de circulation externe 52.

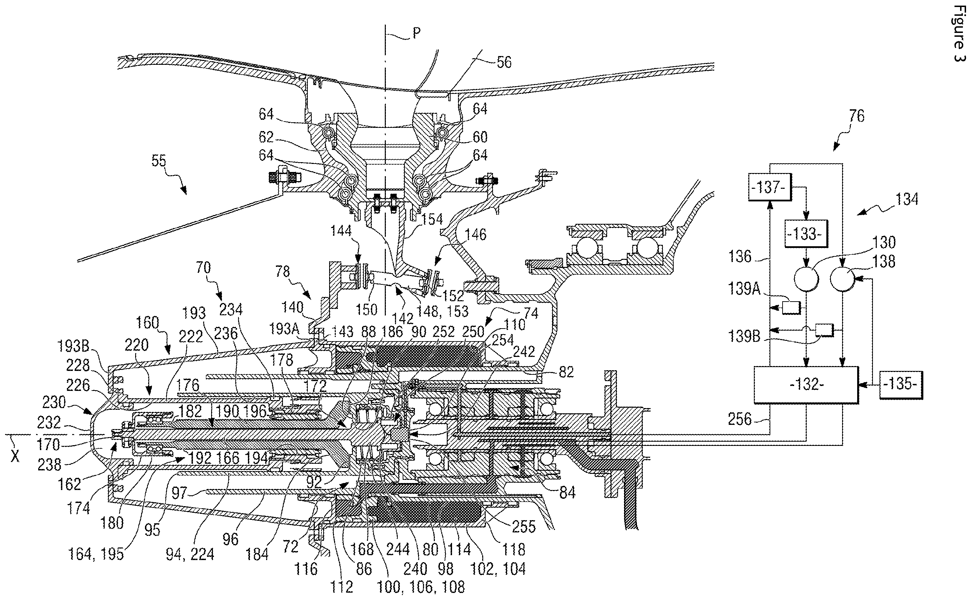

La soufflante 50 comprend un rotor de soufflante 54. Ce rotor de soufflante 54 est monté rotatif relativement à la nacelle 20 autour de l'axe longitudinal X. Il comprend un moyeu 55 (Figure 3) pourvu d'aubes de soufflante 56 s'étendant sensiblement radialement vers l'extérieur depuis le moyeu 55. Ces aubes 56, lorsqu'elles sont mises en rotation, entraînent le flux d'air dans la veine de circulation externe 52.

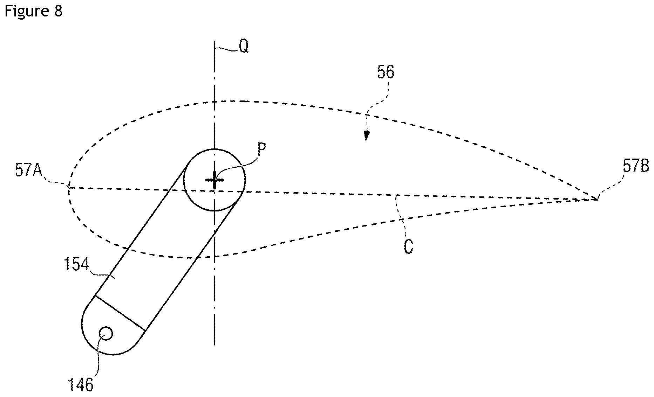

Comme visible sur la Figure 8, chaque aube 56 comprend un bord d'attaque 57A, un bord de fuite 57B et une corde C reliant le bord d'attaque 57A au bord de fuite 57B.

De retour à la Figure 2, le rotor de soufflante 54 est entraîné en rotation par la turbine basse pression 44, par l'intermédiaire de l'arbre basse pression 46. Dans l'exemple représenté, cet entraînement est direct, c'est-à-dire que le rotor de soufflante 54 est solidaire en rotation de l'arbre basse pression 46. En variante (non représentée), cet entraînement se fait par l'intermédiaire d'un réducteur permettant au rotor de soufflante 54 de tourner à une vitesse inférieure à celle de l'arbre basse pression 46.

Dans l'exemple représenté, la soufflante 50 comprend également un stator de soufflante 58 comprenant des aubes fixes 59 agencées à la périphérie de la nacelle 20, dans la veine de circulation externe 52, suivant un plan orthogonal à l'axe longitudinal X. Ce stator de soufflante 58 est ici agencé en aval du rotor de soufflante 54. En variante (non représentée), la soufflante 50 comprend, à la place du stator de soufflante 58, un rotor de soufflante contrarotatif.

Avantageusement, la soufflante 50 est, comme représenté, non carénée, c'est-à-dire que la veine de circulation externe 52 n'a aucune délimitation périphérique. La turbomachine 12 est alors constituée, comme représenté, par un turboréacteur à soufflante non carénée ou, en variante, par un turbopropulseur. En variante (non représentée), la veine de circulation externe 52 est définie entre la nacelle 20 et un carter de soufflante entourant la soufflante 50 ; la turbomachine 12 est alors typiquement constituée par un turboréacteur à fort taux de dilution (en anglais « bypass ratio »), le taux de dilution étant défini comme le rapport du débit du flux secondaire B (froid) sur le débit du flux primaire A (chaud).

Dans l'exemple représenté, la turbomachine 12 est en particulier du type « puller », c'est-à-dire que la soufflante 50 est disposée en amont de la veine de circulation interne 22 et entraîne également le flux d'air dans cette dernière. En variante (non représentée), la turbomachine est du type « pusher », c'est-à-dire que la soufflante 50 est placée autour de la moitié aval de la nacelle 20.

Les aubes 56 du rotor de soufflante 54 sont à calage variable, c'est-à-dire que chaque aube 56 est montée pivotante relativement au moyeu 55 autour d'un axe de pivotement P propre. Cet axe de pivotement P s'étend suivant la direction d'élongation de l'aube 56. Il est orthogonal à l'axe longitudinal X.

Chaque aube 56 est en particulier apte à pivoter autour de l'axe P relativement au moyeu 55 entre une position dite drapeau, dans laquelle la corde C de l'aube 56 est sensiblement parallèle à l'axe longitudinal X, et une position dite voile, dans laquelle la corde C de l'aube 56 est sensiblement orthogonale à l'axe longitudinal X. De préférence, chaque aube 56 est également apte à pivoter au-delà de la position voile, jusqu'à une position dite reverse, dans laquelle la corde C de l'aube 56 forme un angle strictement supérieure à 90°, par exemple sensiblement égal à 95°, avec l'axe longitudinal X. Les aubes 56 étant le plus souvent vrillées, la corde C prise comme référence pour la mesure de l'angle de calage est, par convention, constituée par la corde de l'aube à 75% du rayon du rotor de soufflante 54.

A cet effet, chaque aube 56 est solidaire, comme visible sur la Figure 3, d'une pièce d'attache 60 disposée en pied d'aube. Cette pièce d'attache 60 est montée rotative par rapport au moyeu 55 autour de l'axe de pivotement P. Plus précisément, la pièce d'attache 60 est montée rotative à l'intérieur d'un logement 62 ménagé dans le moyeu 55 par l'intermédiaire de billes 64 ou d'autres éléments roulants.

La soufflante 50 comprend en outre un mécanisme de changement de pas 70 pour ajuster l'angle de calage de chaque aube 56 autour de son axe de pivotement P de sorte à adapter les performances de la turbomachine 12 aux différentes phases de vol.

En référence à la Figure 3, ce mécanisme de changement de pas 70 comprend un bâti 72, un vérin de commande 74, un système 76 de pilotage du vérin 74 et un système de liaison 78.

Le bâti 72 est solidaire du moyeu 55 et est typiquement constitué par une partie du moyeu 55. Il est ainsi fixe relativement aux axes de pivotement P.

Le bâti 72 comprend un socle 80. Ce socle 80 est centré sur l'axe longitudinal X. Ici, il est traversé par les axes de pivotement P.

Dans l'exemple représenté, le socle 80 délimite un logement 82 ouvert vers l'aval. Ce logement 82 est en particulier cylindrique, typiquement cylindrique de révolution, et centré sur l'axe X. Un palier de transfert d'huile 84 est reçu dans ledit logement 82.

Le socle 80 délimite également une cavité 86 débouchant dans une face amont 88 du socle 80 à travers un orifice 90 qui est ici centré sur l'axe X. Cette cavité 86 est en particulier cylindrique, typiquement cylindrique de révolution, et centrée sur l'axe X. Elle est interposée entre la face amont 88 et le logement 82.

Le socle 80 présente un butoir 92 orienté vers l'amont. Ce butoir 92 est ici formé par une partie de la face amont 88. Il s'étend sensiblement radialement et est en particulier agencé autour de l'orifice 90.

Dans l'exemple représenté, le bâti 72 comprend également un cylindre 94 faisant saillie vers l'amont depuis le socle 80. Ce cylindre 94 est centré sur l'axe X et ouvert à son extrémité amont 95. Il s'étend autour du butoir 92. Il est typiquement cylindrique de révolution.

Ici, le bâti 72 comprend encore un cylindre périphérique 96, coaxial au cylindre 94 et entourant ce dernier, faisant saillie vers l'amont depuis le socle 80. Ce cylindre 96 est ouvert à son extrémité amont 97. Il est typiquement cylindrique de révolution.

Le socle 80 et le cylindre périphérique 96 délimitent ensemble une surface périphérique externe 88 du bâti 72. Cette surface périphérique externe 88 est sensiblement cylindrique et centrée sur l'axe X. Elle est orientée radialement vers l'extérieur.

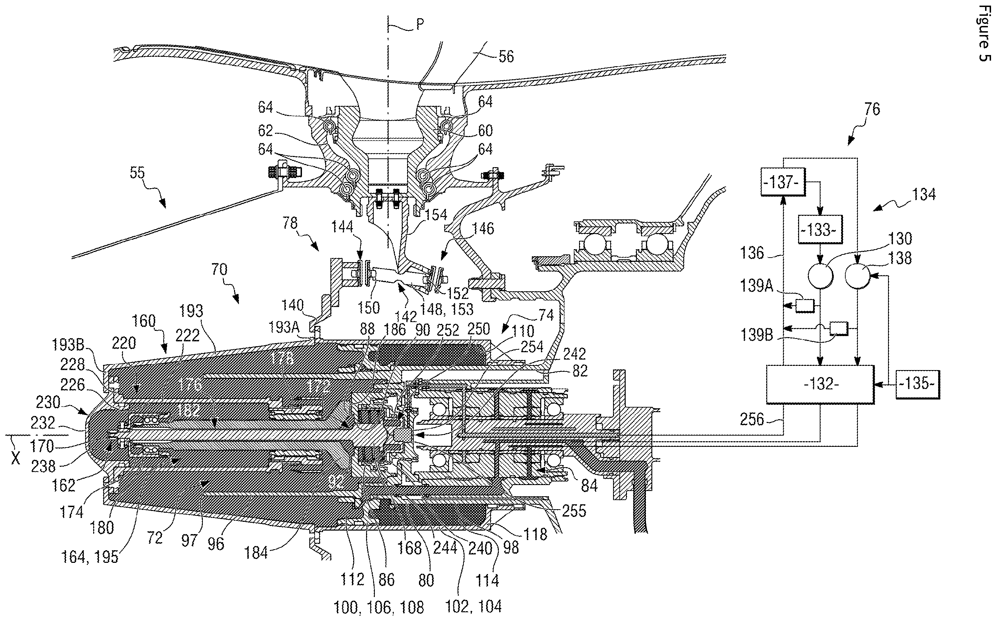

En variante, comme représenté sur la Figure 5, le bâti 72 ne comprend pas le cylindre 94.

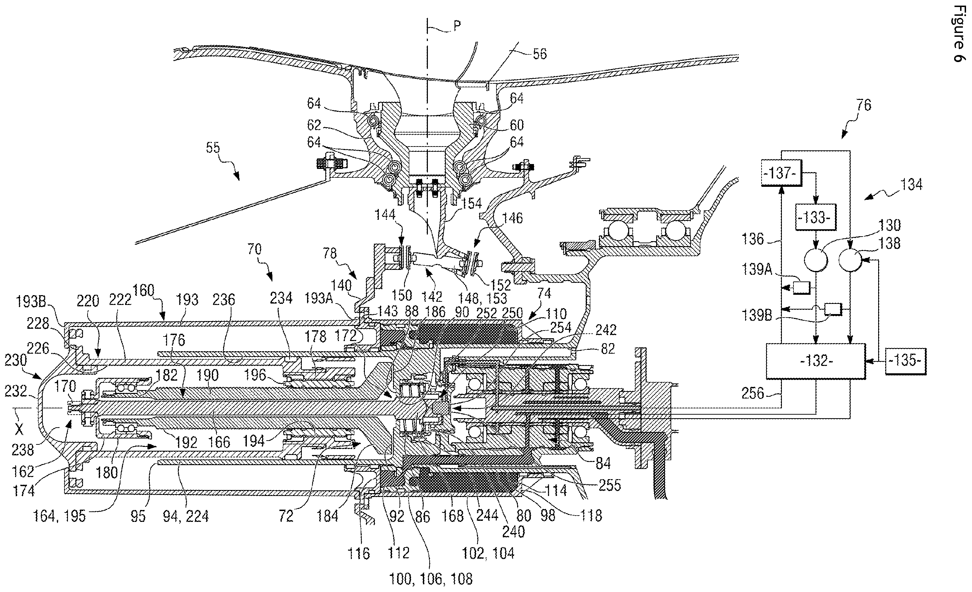

En variante encore, comme représenté sur la Figure 6, le bâti 72 ne comprend pas le cylindre périphérique 96. La surface périphérique externe 88 est alors délimitée par le socle 80 et le cylindre 94.

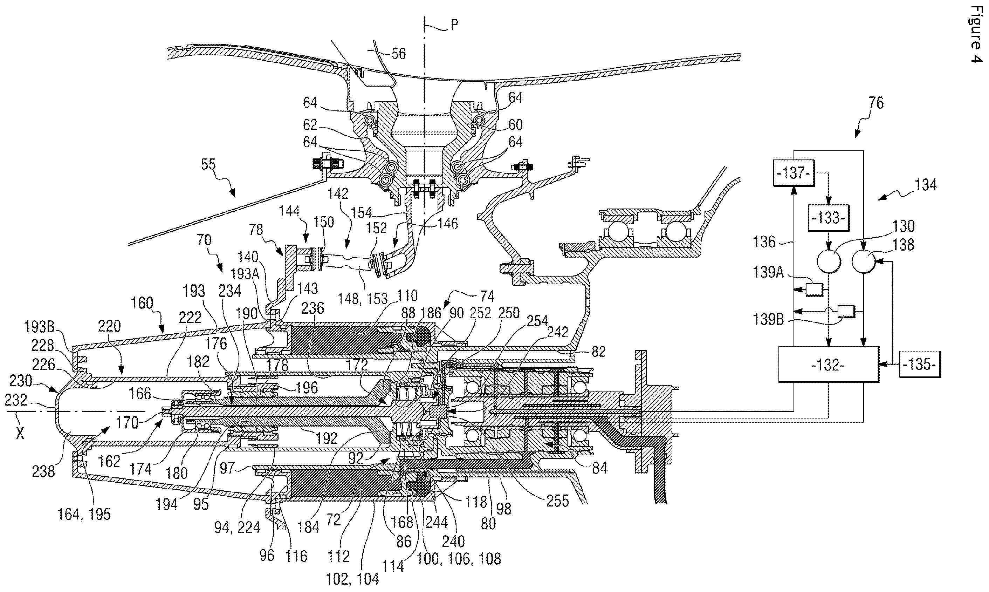

De retour à la Figure 3, le vérin de commande 74 comporte une partie fixe 100, solidaire du bâti 72, et une partie mobile 102 mobile en translation suivant l'axe longitudinal X relativement à la partie fixe 100 entre une position rétractée, représentée sur la Figure 3, et une position déployée représentée sur la Figure 4. Optionnellement, la partie mobile 102 est également mobile en rotation autour de l'axe longitudinal X sur un angle restreint, par exemple de l'ordre de 5°.

Le vérin de commande 74 comprend en particulier un cylindre 104, continu, formant l'un de la partie fixe 100 et de la partie mobile 102 et un piston 106 formant l'autre de la partie fixe 100 et de la partie mobile 102. Ici, le cylindre 104 forme la partie mobile 102 et le piston 106 forme la partie fixe 100. Dans un exemple non revendiqué (non représentée), c'est l'inverse : le cylindre 104 forme la partie fixe 100 et le piston 106 forme la partie mobile 102.

Ainsi, dans l'exemple représenté, le cylindre 104 s'étend autour de la surface périphérique externe 88 du bâti 72, coaxialement à cette dernière, et le piston 106 est constitué par une collerette 108 solidaire du bâti 72 s'étendant radialement vers l'extérieur depuis la surface périphérique externe 88 jusqu'au cylindre 104.

Le cylindre 104 délimite une cavité interne 110. Le piston 106 divise ladite cavité interne 110 en deux chambres fluidiques 112, 114 contigües. Chacune contient un fluide de commande, typiquement constitué par une huile, pour commander le déplacement de la partie mobile 102 relativement à la partie fixe 100. Ce fluide de commande est à une première pression dans la première chambre fluidique 112 et à une deuxième pression dans la deuxième chambre fluidique 114. Les première et deuxième chambres fluidiques 112, 114 sont agencées de sorte que l'augmentation relative de la première pression (c'est-à-dire relativement à la deuxième pression) entraîne le déplacement du piston 110 vers sa position déployée, l'augmentation relative de la deuxième pression (c'est-à-dire relativement à la première pression) entraînant le déplacement du piston 110 vers sa position rétractée.

Ici, chacune des chambres fluidiques 112, 114 est délimitée intérieurement par la surface périphérique externe 88 du bâti 72 et extérieurement par le cylindre 104. La première chambre fluidique 112 est par ailleurs délimitée à son extrémité aval par le piston 106 et la deuxième chambre fluidique 114 est délimitée à son extrémité amont par le piston 106.

Le vérin de commande 74 est ainsi particulièrement compact, ce qui permet de l'alléger.

Dans l'exemple représenté sur la Figure 3, la partie mobile 102 comprend également une bague de guidage amont 116 et une bague de guidage aval 118 chacune solidaire du cylindre 104 et s'étendant radialement vers l'intérieur depuis le cylindre 104 jusqu'à la face périphérique externe 88 du bâti 72. La bague de guidage amont 116 est disposée en amont du piston 106 et délimite une extrémité amont de la première chambre fluidique 112. La bague de guidage aval 118 est disposée en aval du piston 106 et délimite une extrémité aval de la deuxième chambre fluidique 114.

Dans l'exemple représenté sur la Figure 3, chacune des bagues de guidage amont et aval 116, 118 constitue une bague d'étanchéité et ferme longitudinalement la première chambre fluidique 112, respectivement la deuxième chambre fluidique 114. Les chambres fluidiques 112, 114 sont ainsi fermées à chacune des extrémités longitudinales du vérin de commande 74

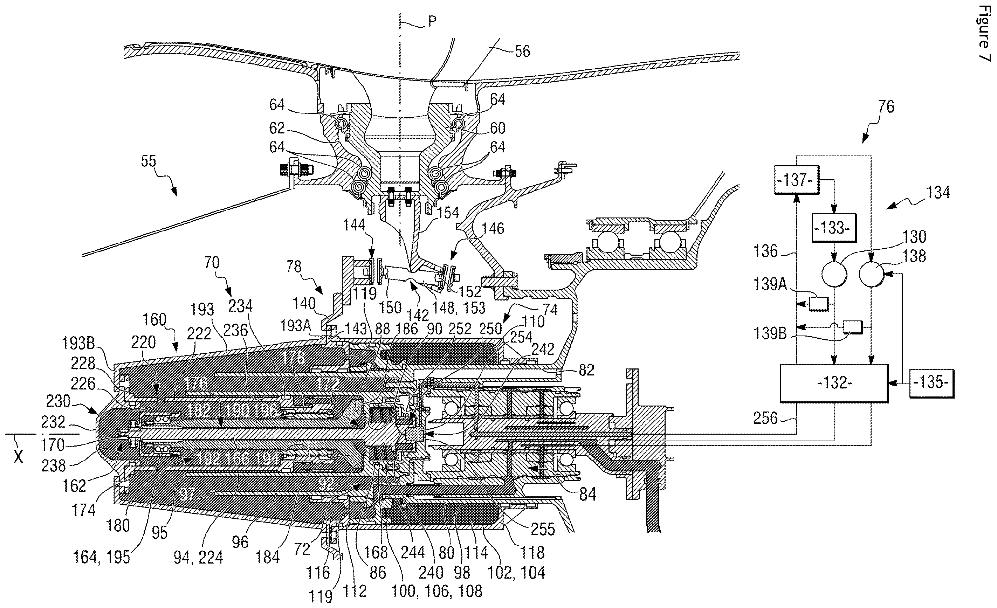

En variante, comme représenté sur la Figure 7, seule la bague de guidage aval 118 constitue une bague d'étanchéité. La bague de guidage amont 118 présente, elle, des perçages 119 permettant au fluide de commande de s'écouler à travers la bague de guidage amont 118.

En variante encore, comme représenté sur la Figure 5, la partie mobile 102 ne comprend pas de bague de guidage amont 118.

De retour à la Figure 3, le système de pilotage 76 comprend un générateur de pression 130 pour porter le fluide de commande à une troisième pression supérieure aux première et deuxième pressions, une unité de contrôle de pression 132 pour ajuster la pression du fluide de commande dans les première et deuxième chambres fluidiques 112, 114 au moyen de la troisième pression, et une ligne de retour 136 pour évacuer le fluide de commande dépressurisé. Le système de pilotage 76 comprend également un réservoir principal 133, un circuit de secours 134 et un module de commande 135.

Le générateur de pression 130 comprend par exemple une pompe apte à pomper le fluide pour le porter à la troisième pression, par exemple 100 bars. Une soupape de surpression principale 139A permet d'évacuer une partie du fluide de commande vers la ligne de retour 136 lorsque la pression du fluide de commande en aval du générateur de pression 130 excède la troisième pression.

L'unité de contrôle de pression 132 est alimentée en fluide de commande à la troisième pression par le générateur de pression 130. Elle est raccordée fluidiquement à la première chambre fluidique 112 et à la deuxième chambre fluidique 114 via le palier de transfert d'huile 106. Elle est apte à répartir le fluide de commande entre la première chambre fluidique 112 et la deuxième chambre fluidique 114 de manière à ajuster la pression de fluide à l'intérieur de chacune de ces chambres 112, 114 et, ainsi, ajuster la position du piston 110 entre ses positions rétractée et déployée. Elle est également apte à évacuer du fluide de commande provenant des première et deuxième chambres fluidiques 112, 114 dans la ligne de retour 136.

Le réservoir principal 133 est configuré pour collecter du fluide de commande dépressurisé provenant de la ligne de retour 136. Il alimente le générateur de pression 130.

Le circuit de secours 134 est apte à alimenter la première chambre fluidique 112 en fluide de commande de manière à déplacer le piston 110 vers sa position déployée en cas de défaillance du générateur de pression 130. A cet effet, le circuit de secours 134 comprend un réservoir auxiliaire 137 et une pompe auxiliaire 138. Dans l'exemple représenté il comprend également une soupape de surpression auxiliaire 139B.

Le réservoir auxiliaire 137 est configuré pour collecter du fluide de commande dépressurisé provenant de la ligne de retour 136. Il alimente la pompe auxiliaire 138. Dans l'exemple représenté, il alimente également le réservoir principal 133, le fluide de commande dépressurisé provenant de la ligne de retour 136 transitant par le réservoir auxiliaire 137 avant d'atteindre le réservoir principal 133.

La pompe auxiliaire 138 est apte à pomper le fluide de commande dans le réservoir auxiliaire 137 pour le porter à la troisième pression. Elle est raccordée fluidiquement à l'unité de contrôle de pression 132 de manière à l'alimenter en fluide de commande à la troisième pression, l'unité de contrôle de pression 132 étant configurée pour rediriger l'intégralité du fluide de commande provenant de la pompe auxiliaire 138 vers la première chambre fluidique 112.

La soupape de surpression 139B est apte à évacuer une partie du fluide de commande vers la ligne de retour 136 lorsque la pression du fluide de commande en aval de la pompe auxiliaire 138 excède la troisième pression.

Le module de commande 135 est configuré pour recevoir une instruction de calage (non représentée) et en déduire un signal de commande transmis à l'unité de contrôle de pression 132. En particulier, le module de commande 135 est configuré pour transmettre à l'unité de contrôle de pression 132 un signal de commande destiné à augmenter la pression de fluide dans la première chambre 112 lorsque l'instruction de calage vise à faire augmenter le pas des aubes 56, et pour transmettre à l'unité de contrôle de pression 132 un signal de commande destiné à augmenter la pression de fluide dans la deuxième chambre 114 lorsque l'instruction de calage vise à faire réduire le pas des aubes 56.

Le module de commande 135 est également configuré pour transmettre au circuit de secours 134, plus particulièrement à sa pompe auxiliaire 138, une instruction de démarrage en cas de défaillance du générateur de pression 130.

Le système de liaison 78 relie la partie mobile 102 à chaque aube 56 de sorte à convertir la translation de la partie mobile 102 suivant l'axe longitudinal X et, le cas échéant, la rotation de la partie mobile 102 autour de l'axe longitudinal X en une rotation de chaque aube 56 autour de son axe de pivotement P. En particulier, le système de liaison 78 relie la partie mobile 102 à chaque aube 56 de sorte à convertir :
- la translation de la partie mobile 102 suivant l'axe longitudinal X dans un premier sens en une rotation de l'aube à calage variable 56 autour de l'axe de pivotement P vers la position voile, et
- la translation de la partie mobile 102 suivant l'axe longitudinal X dans un deuxième sens opposé au premier sens en une rotation de l'aube à calage variable 56 autour de l'axe de pivotement P vers la position drapeau.

A cet effet, le système de liaison 78 comprend une couronne de synchronisation 140 solidaire de la partie mobile 102 et, pour chacune des aubes 56, un mécanisme 142 de liaison de l'aube 56 à la couronne de synchronisation 140.

La couronne de synchronisation 140 s'étend dans un plan radial autour de la partie mobile 102. Elle est en particulier fixée à une extrémité amont 143 de la partie mobile 102.

Chaque mécanisme de liaison 142 comprend une première articulation 144 solidaire de la partie mobile 102, une deuxième articulation 146 solidaire de l'aube 56, à l'écart de l'axe de pivotement P de ladite aube 56, et un organe de liaison 148 reliant la première articulation 144 à la deuxième articulation 146.

La première articulation 144 est portée par la couronne de synchronisation 140. Elle est ici constituée par une liaison rotule.

La deuxième articulation 146 est également constituée par une liaison rotule. Elle est excentrée relativement à l'axe de pivotement P.

L'organe de liaison 148 présente une première extrémité 150 articulée à la première articulation 144 et une deuxième extrémité 152 articulée à la deuxième articulation 146. Avantageusement l'organe de liaison 148 est rigide et de longueur réglable, c'est-à-dire que la distance entre les première et deuxième extrémités 150, 152 peut être modifiée, ce qui permet d'en régler précisément la longueur à l'arrêt de sorte à permettre le pilotage de l'angle de calage de chaque aube 56 par le mécanisme de changement de pas 70.

L'organe de liaison 148 est ici constitué par une bielle 153.

Dans l'exemple représenté chaque mécanisme de liaison 142 comprend également une manivelle 154 reliant la pièce d'attache 60 à la deuxième articulation 146. Cette manivelle 154 est rigide et solidaire de la pièce d'attache 60. Elle s'étend au moins pour partie suivant une direction orthogonale à l'axe de pivotement P. Elle forme un bras de mise en rotation de l'aube 56.

Dans l'exemple représenté, le premier sens va de l'amont vers l'aval, c'est-à-dire que le déplacement de l'organe mobile 102 vers le butoir 92 (en d'autres termes vers sa position rétractée) entraîne une rotation de chaque aube 56 vers sa position voile, et le deuxième sens va de l'aval vers l'amont, c'est-à-dire que le déplacement de l'organe mobile 102 à l'écart du butoir 92 (en d'autres termes vers sa position déployée) entraîne une rotation de chaque aube 56 vers sa position drapeau. De plus, la première articulation 144 est disposée à l'amont de la deuxième articulation 146.

A cet effet, la deuxième articulation 146 est, comme visible sur la Figure 8, placée à l'opposé du bord de fuite 57B relativement à un plan Q orthogonal à la corde C et contenant l'axe de pivotement P.

En variante (non représentée), le premier sens va de l'aval vers l'amont, la première articulation 144 étant disposée à l'aval de la deuxième articulation 146. La deuxième articulation 146 est alors placée du même côté du bord de fuite 57B relativement au plan Q orthogonal à la corde C et contenant l'axe de pivotement P.

Ces agencements particuliers permettent, lorsque le mécanisme de changement de pas 70 est immobilisé, que les sollicitations naturelles de l'aube 56 vers sa position voile fassent travailler l'organe de liaison 148 en traction et non en compression. Le risque de flambage de l'organe de liaison 148 est donc très faible, de sorte qu'il est possible d'utiliser un organe de liaison 148 relativement peu résistant et ainsi d'alléger le mécanisme de changement de pas 70.

Le mécanisme de changement de pas 70 comprend encore un dispositif de verrouillage de pas 160 propre à bloquer la translation de la partie mobile 102 du vérin de commande 74 dans le premier sens, c'est-à-dire ici vers sa position rétractée.

Ce dispositif de verrouillage 160 comprend un organe de support 162 et un système vis-écrou 164.

L'organe de support 162 est mobile en translation relativement au bâti 72 suivant l'axe longitudinal X entre une position de fonctionnement, représentée sur les Figures 3 à 7, et une position de verrouillage (non représentée). L'organe de support 162 se déplace de sa position de fonctionnement à sa position de verrouillage par translation dans le premier sens, c'est-à-dire, dans l'exemple représenté, par translation de l'amont vers l'aval. En d'autres termes, la position de fonctionnement de l'organe de support 162 est disposée en amont de sa position de verrouillage.

L'organe de support 162 comprend un corps 166 allongé suivant l'axe longitudinal X et centré sur l'axe longitudinal X. Ledit corps 166 présente une première extrémité longitudinale 168, en particulier une extrémité longitudinale aval, engagée à travers l'orifice 90 du bâti 72, et une deuxième extrémité longitudinale 170 libre. Le corps 166 est ici plein.

La première extrémité longitudinale 168 et l'orifice 90 du bâti 72 forment ensemble un système de guidage 172 guidant l'organe de support 162 relativement au bâti 72. Ce système de guidage 172 est ici disposé d'un côté aval du système vis-écrou 164.

L'organe de support 162 comprend également une jupe 174 solidaire du corps 166 et agencée autour de la deuxième extrémité longitudinale 170 du corps 166.

Le système vis-écrou 164 comprend une vis 176 et un écrou 178.

La vis 176 s'étend autour du corps 166 de l'organe de support 162 et est coaxiale audit corps 166. Elle est solidaire en translation de l'organe de support 162 et montée mobile en rotation autour de l'axe longitudinal X relativement à l'organe de support 162. A cet effet, la vis 176 est assemblée à l'organe de support 162 par l'intermédiaire d'un palier 180. Ce palier 180 est ici interposé entre la jupe 174 de l'organe de support 162 et une portion d'extrémité 182 de la vis 176, logée entre le corps 166 et la jupe 174.

La vis 176 présente une deuxième portion d'extrémité longitudinale 184 opposée à la portion d'extrémité 182. Cette deuxième portion d'extrémité longitudinale 184 définit une surface de butée 186 radiale. Cette surface de butée 186 est à distance du bâti 72 lorsque l'organe de support 162 est en position de fonctionnement et en appui contre le butoir 92 du bâti 72 lorsque l'organe de support 162 est en position de verrouillage.

Ici, la deuxième portion d'extrémité longitudinale 184 s'évase depuis un corps fileté 190 de la vis 176 jusqu'à la surface de butée 186. Ainsi, la surface de contact entre la surface de butée 186 et le butoir 92 est augmentée, ce qui accroit les forces de frottement entre la surface de butée 186 et le butoir 92 et permet une meilleure transmission des efforts de freinage et de blocage.

La surface de butée 186 et le butoir 92 sont ici chacun lisses. En variante (non représentée), la surface de butée 186 et/ou le butoir 92 présente(nt) des aspérités, de manière à accroitre encore davantage les forces de frottement entre la surface de butée 186 et le butoir 92 et permettre une transmission des efforts encore accrue.

La surface de butée 186 s'étend en particulier sensiblement radialement. Elle est orientée dans le premier sens, c'est-à-dire, dans l'exemple représenté, vers l'aval. Ici, elle est ménagée à une extrémité aval de la vis 176.

Le corps fileté 190 s'étend de l'une à l'autre des portions d'extrémité 182, 184. Il présente un filetage externe 192 à sa circonférence.

Le corps fileté 190 et l'écrou 178 sont logés à l'intérieur du cylindre 94 du bâti 72.

L'écrou 178 est solidaire de la partie mobile 102 du vérin 74 et coaxial à la vis 176. Il coopère avec la vis 176 de sorte qu'une translation de l'écrou 178 suivant l'axe longitudinal X relativement à la vis 176 entraîne la rotation de la vis 176 autour de l'axe longitudinal X relativement à l'organe de support 162.

L'écrou 178 présente un taraudage interne 194.

Le système vis-écrou 164 est en particulier formé par un système de vis à rouleaux satellites 195 réversible. De manière classique, ce système de vis à rouleaux satellites 195 comprend, outre la vis 176 et l'écrou 178, une pluralité de rouleaux 196 interposés entre la vis 176 et l'écrou 178, chaque rouleau 196 étant allongé parallèlement à l'axe longitudinal X.

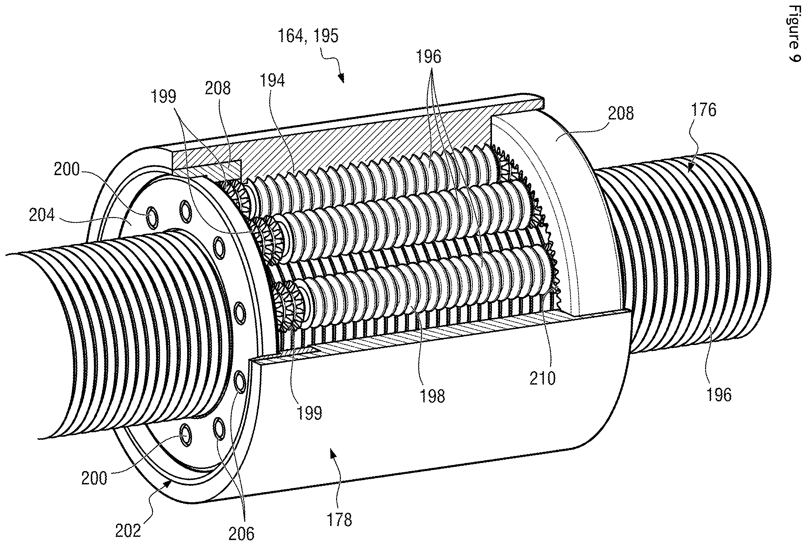

Comme visible sur la Figure 9, chaque rouleau 196 présente un filetage 198 en prise avec le filetage externe 192 de la vis 176 et le taraudage interne 194 de l'écrou 176. Il comprend en outre des dentures externes 199 situées à ses extrémités et prolongées de tourillons lisses 200.

Le système de vis à rouleaux satellites 195 présente également, de manière toujours classique, un dispositif 202 de guidage et de maintien des rouleaux 196. Ce dispositif de guidage et de maintien 202 comprend des porte-rouleaux 204 (également appelés bagues d'espacement) qui sont montés coaxialement à la vis 176, entre celle-ci et l'écrou 178, avec des encoches 206 accueillant les tourillons 200 des rouleaux 196. Il comprend également une denture de synchronisation 210 dans laquelle s'engrènent les dentures externes 198 situées aux extrémités respectives des rouleaux 196. Cet engrenage des dentures externes 198 dans la denture de synchronisation 210 forme un train planétaire dont le rôle est d'assurer une synchronisation du mouvement satellitaire, encore dit planétaire ou épicycloïdal, des rouleaux 196, fluidifiant ainsi le mouvement des rouleaux 196 en les aidant à rouler aisément, avec le moins de glissement possible, sur le filetage 192 de la vis 176 et le taraudage 194 de l'écrou 178.

Dans l'exemple représenté, le système de vis à rouleaux satellites 195 est du type standard, les rouleaux 196 étant solidaires en translation de l'écrou 178. La denture de synchronisation 210 est constituée par la denture interne de couronnes 208 solidaires de l'écrou 178 et montées respectivement à chaque extrémité longitudinale de l'écrou 178, ce dernier ayant une extension longitudinale sensiblement égale à celle de la portion filetée des rouleaux 196 et inférieure à celle du corps fileté 190 de la vis 176.

En variante (non représentée), le système de vis à rouleaux satellites 195 est du type inversé, les rouleaux 196 étant solidaires en translation de la vis 176. La denture de synchronisation 210 est alors constituée par deux dentures externes de la vis 176 à chaque extrémité longitudinale du corps fileté 190, ce dernier ayant une extension longitudinale sensiblement égale à celle de la portion filetée des rouleaux 196 et inférieure à celle de l'écrou 178.

En variante encore, le système de vis à rouleaux satellites 195 est constitué par un système de vis à rouleaux satellites recirculés tel que par exemple celui décrit dans le document EP 275 504 A2, ou par un système de vis à rouleaux à roulement tel que par exemple celui décrit dans le document EP 168 942 A1 ou celui décrit dans le document EP 671 070 A1.

Cette caractéristique permet une bonne transmission des efforts de l'écrou 178 à la vis 176 par le système vis-écrou 164, tout en conservant un petit pas dans la liaison hélicoïdale du système vis-écrou 164. En particulier, en cas de blocage de la rotation de la vis 176, elle permet d'immobiliser l'écrou 178 relativement à la vis 176 même en l'absence d'écrou de verrouillage distinct. Il est ainsi possible de s'affranchir de l'usage d'un écrou de verrouillage distinct, ce qui simplifie la fabrication et réduit les coûts du mécanisme, tout en augmentant sa fiabilité et minimisant sa masse.

En variante (non représentée), le système vis-écrou 164 est constitué par un système vis-écrou similaire à celui décrit dans EP 1 832 509.

De retour à la Figure 3, le dispositif de verrouillage de pas 160 est ici hors des chambres fluidiques 112, 114 du vérin de commande 74. Cet agencement permet d'assembler au bâti 72 le dispositif de verrouillage de pas 160 et le vérin 74 séparément l'un de l'autre, ce qui facilite le montage du mécanisme de changement de pas 70 et réduit ainsi les coûts.

Comme visible sur la Figure 3, une partie du dispositif de verrouillage de pas 160 s'étend même longitudinalement à l'écart du vérin 74. En d'autres termes, il existe un plan radial au-delà duquel s'étend une partie du dispositif de verrouillage de pas 160 sans que le vérin 74 ne s'étende au-delà dudit plan radial. En particulier, ladite partie du dispositif de verrouillage de pas 160 s'étend en amont du vérin 74.

Pour permettre cet agencement, le dispositif de verrouillage de pas 160 comprend une virole 193 reliant l'écrou 178 à la partie mobile 102 du vérin 74. Cette virole 193 fait ici saillie longitudinalement vers l'amont depuis le vérin de commande 74. Elle est en particulier tronconique, son diamètre allant décroissant depuis son extrémité aval 193A, rattachée au vérin 74, jusqu'à son extrémité amont 193B, rattachée à l'écrou 178.

Le dispositif de verrouillage de pas 160 est également longitudinalement en porte-à-faux relativement au bâti 72. En d'autres termes, toute la partie du bâti 72 soutenant le dispositif de verrouillage 160 est située longitudinalement d'un même côté, ici en aval, du dispositif de verrouillage 160 ; le dispositif de verrouillage 160 n'est pas encadré longitudinalement par la partie du bâti 72 le soutenant et aucune pièce solidaire du bâti 72 ne soutient l'extrémité du dispositif de verrouillage de pas 160 opposée à celle soutenue par le bâti 72. Grâce à cet agencement, on fait l'économie d'un support disposé en amont du dispositif de verrouillage 160, ce qui facilite l'accès au mécanisme de changement de pas 70 et plus particulièrement au système de liaison 78.

Ainsi, le vérin de commande 74 est disposé longitudinalement du même côté de l'écrou 178, ici le côté aval, que le dispositif de guidage 172 et le butoir 92.

Pour assurer un bon support du dispositif de verrouillage 160 malgré ce porte-à-faux, le mécanisme de changement de pas 70 comprend un dispositif 220 de guidage de l'écrou 178 relativement au bâti 72. Ce dispositif de guidage 220 comporte un cylindre interne 222 solidaire de l'écrou 178 et un cylindre externe 224 solidaire du bâti 72, le cylindre interne 222 coopérant avec le cylindre externe 224 de manière à coulisser longitudinalement à l'intérieur de ce dernier.

L'écrou 178 est en particulier monté sur une face interne 226 du cylindre interne 222. Le cylindre interne 222 présente une extrémité amont 228 à laquelle est fixée l'extrémité amont 193B de la virole 193.

Le cylindre externe 224 est ici constitué par le cylindre 94 du bâti 72.

Le dispositif de verrouillage de pas 160 nécessite une lubrification. A cet effet, le dispositif de verrouillage 160 comprend un carter 230 délimitant au moins partiellement une enceinte de circulation d'un fluide de lubrification du dispositif de verrouillage de pas 160. Ce carter 230 est solidaire de l'écrou 178 et entoure l'écrou 178, la vis 176 et l'organe de support 162.

Dans les exemples des Figures 3, 4 et 6, le carter 230 comprend le cylindre interne 222 et un bouchon 232 fermant une extrémité du cylindre interne 222 opposée au bâti 72, ici l'extrémité amont 228. Le cylindre interne 222 présente à sa périphérie une étanchéité 234 en contact avec une face interne 236 du cylindre externe 224. Ainsi, le cylindre externe 224 et le carter 230 délimitent ensemble une enceinte 238 de circulation d'un fluide de lubrification du dispositif de verrouillage 160. Cette enceinte 238 est fluidiquement isolée des chambres fluidiques 112, 114 du vérin 74 par l'étanchéité 234 et la bague de guidage amont 116. L'étanchéité 234 et la bague de guidage 116 forment ainsi des étanchéités du mécanisme de changement de 70 isolant fluidiquement du dispositif de verrouillage de pas 160 les chambres fluidiques 112, 114 du vérin 74.

Avantageusement, le fluide de lubrification du dispositif de verrouillage 160 est constitué par une huile. Le dispositif de verrouillage de pas 160 comprend alors un accumulateur (non représenté) permettant le stockage du fluide de lubrification lorsque le vérin 74 est en position rétractée et le transfert du fluide de lubrification dans l'enceinte 238 lorsque le vérin 74 se déplace vers sa position déployée. En variante, le fluide de lubrification du dispositif de verrouillage 160 est constitué par une graisse déposée sur la vis 176 et les roulements du palier 180.

Dans l'exemple de la Figure 5, où le cylindre externe 224 et la bague de guidage amont 116 sont absents, ainsi que dans la Figure 7, où le cylindre interne 222 et la bague de guidage amont 116 sont percés, le carter 230 est constitué par la virole 193 et par un bouchon 239 fermant l'extrémité amont 193B de la virole 193. La première chambre fluidique 112 est alors en communication fluidique avec l'intérieur du carter 230, le fluide de commande constituant le fluide de lubrification du dispositif de verrouillage 160.

Cette variante permet de s'affranchir de l'utilisation d'un accumulateur. Elle nécessite cependant une pompe 130 à débit plus important que dans la variante des Figures 3, 4 et 6.

Le dispositif de verrouillage 160 comprend également un dispositif de rappel 240 sollicitant l'organe de support 162 vers sa position de verrouillage et un dispositif de maintien 242 pour maintenir l'organe de support 162 dans sa position de fonctionnement lorsque le mécanisme de changement de pas 70 est en conditions normales de fonctionnement.

Le dispositif de rappel 240 est ici constitué par un ressort de compression comprimé entre le bâti 72 et un épaulement 244 solidaire de l'organe de support 162. Il est en particulier logé dans la cavité 86, entre l'épaulement 244 et l'orifice 90.

Le dispositif de maintien 242 comprend un vérin de contrebalancement 250 comportant un piston de contrebalancement 252 et une chambre de contrebalancement 254.

Le piston de contrebalancement 252 est monté mobile en translation suivant l'axe longitudinal X relativement au bâti 72. Il est en particulier coaxial à l'organe de support 162. Dans l'exemple représenté, il est agencé dans le prolongement longitudinal de l'organe de support 162, entre l'organe de support 162 et la chambre de contrebalancement 254.

La chambre de contrebalancement 254 est délimitée entre le piston de contrebalancement 252 et le bâti 72. En particulier, la chambre de contrebalancement 254 est délimitée entre le piston de contrebalancement 252 et un fond 255 de la cavité 86 opposé à l'orifice 90 ; le système de guidage 172, le dispositif de rappel 240 et le dispositif de maintien 250 sont ainsi tous disposés longitudinalement d'un même côté, ici le côté aval, du système vis-écrou 164 et donc en particulier de l'écrou 178.

La chambre de contrebalancement 254 est raccordée fluidiquement au générateur de pression 130 par un circuit de connexion fluidique 256 de sorte à être alimentée en fluide de commande à la troisième pression. Elle est destinée à contrebalancer la sollicitation du dispositif de rappel 240 lorsque cette alimentation est active.

A cet effet, le vérin de contrebalancement 250 est agencé de sorte que la pression exercée sur le piston 252 par le fluide contenu dans la chambre 254 soit orientée dans une direction opposée à celle de la sollicitation du dispositif de rappel 250 : dans l'exemple représenté, le piston de contrebalancement 252 est interposé entre la chambre 254 et l'épaulement 244 et l'épaulement 244 est interposé entre le piston 252 et le dispositif de rappel 240. De plus, le piston de contrebalancement 252 et la chambre de contrebalancement 254 sont dimensionnés de sorte que, lorsque la chambre 254 est alimentée en fluide de commande à la troisième pression, la force exercée par le fluide de commande sur le piston 252 soit supérieure à la sollicitation du dispositif de rappel 240.

Ainsi, lorsque l'alimentation de la chambre 254 en fluide de commande à la troisième pression est active, la sollicitation du dispositif de rappel 240 est annulée et l'organe de support 162 maintenu en position de fonctionnement.

Dans l'exemple représenté, l'unité de contrôle de pression 132 est interposée fluidiquement entre le générateur de pression 130 et le circuit de connexion fluidique 256. Elle présente une première configuration, dans laquelle elle isole le circuit de connexion fluidique 256 de la ligne de retour 136, et une deuxième configuration, dans laquelle elle raccorde fluidiquement le circuit de connexion fluidique 256 à la ligne de retour 136.

L'unité de contrôle de pression 132 est configurée pour être normalement dans sa première configuration et pour basculer dans sa deuxième configuration sur réception d'une instruction de commande transmise par le module de commande 135.

Un procédé de changement du pas des aubes 56, mis en œuvre par le mécanisme de changement de pas 70, va maintenant être décrit.

Lors d'une première étape de ce procédé, le module de commande 135 reçoit tout d'abord une instruction de calage visant à faire augmenter le pas des aubes 56. Le module de commande 135 transmet alors à l'unité de contrôle de pression 132 un signal de commande destiné à augmenter la pression de fluide dans la première chambre 112. La pression de fluide dans la première chambre 112 augmentant, la partie mobile 102 du vérin 74 se déplace dans le deuxième sens, vers sa position déployée, ce qui, par l'intermédiaire du système de liaison 78, entraîne le pivotement des aubes 56 vers les grands pas (c'est-à-dire vers la position drapeau).

Une fois la partie mobile 102 arrivée dans une position d'équilibre, elle se stabilise, les aubes 56 conservant une orientation fixe.

Lors d'une deuxième étape du procédé de changement de pas, le module de commande 135 reçoit tout d'abord une instruction de calage visant à faire réduire le pas des aubes 56. Le module de commande 135 transmet alors à l'unité de contrôle de pression 132 un signal de commande destiné à augmenter la pression de fluide dans la deuxième chambre 114. La pression de fluide dans la deuxième chambre 114 augmentant, la partie mobile 102 du vérin 74 se déplace dans le premier sens vers sa position rétractée, ce qui, par l'intermédiaire du système de liaison 78, entraîne le pivotement des aubes 56 vers les petits pas (c'est-à-dire vers la position voile).

Une fois la partie mobile 102 arrivée dans une position d'équilibre, elle se stabilise, les aubes 56 conservant une orientation fixe.

Optionnellement, le procédé de changement de pas comprend également, suite à la première ou à la deuxième étape, une étape de verrouillage commandé de l'orientation des aubes 56.

Lors de cette étape, le module de commande 135 transmet à l'unité de contrôle de pression 132 une commande de verrouillage de pas. Sous l'effet de cette commande, l'unité de contrôle de pression 132 raccorde fluidiquement le circuit de connexion fluidique 256 à la ligne de retour 136, entraînant une baisse de la pression de fluide dans la chambre de contrebalancement 254. La pression de fluide dans ladite chambre 254 est alors insuffisante pour contrebalancer la sollicitation du dispositif de rappel 240, qui ainsi entraîne le déplacement de l'organe de support 162 vers sa position de verrouillage.

Lors de ce déplacement, la vis 176, tout en se translatant, tourne autour de l'axe longitudinal X sous l'effet de la résistance imposée par l'ensemble de l'écrou 178 et des rouleaux 194 (lesquels sont maintenus immobiles en translation par le vérin de commande 74) jusqu'à ce que sa surface de butée 186 vienne en appui contre le butoir 92 du bâti 72, bloquant la rotation de la vis 176 autour de l'axe longitudinal X et sa translation suivant le même axe X.

Les aubes 56 sont ainsi bloquées dans leur orientation même en cas de perte de pression fluidique dans la première chambre 112.

En cas de perte de pression dans la deuxième chambre 114 uniquement, la partie mobile 102 du vérin 74 est déplacée dans le deuxième sens sous l'effet de la différence de pression entre les deux chambres 112, 114, entraînant avec elle la vis 176 et l'organe de support 162, qui retrouve sa position de fonctionnement. La partie mobile 102 n'est donc plus immobilisée et peut continuer de se déplacer dans le deuxième sens jusqu'à ce que les aubes 56 se retrouvent en position drapeau.

En cas de dysfonctionnement du système de pilotage 76, typiquement en cas de panne du générateur de pression 130, le procédé de changement de pas comprend une étape supplémentaire de verrouillage non-commandé de l'orientation des aubes 56.

Lors de cette étape, le dysfonctionnement du système de pilotage 76 entraîne une baisse de la pression de fluide dans la chambre de contrebalancement 254, typiquement parce que le générateur de pression 130 n'est plus en mesure de porter le fluide de commande à la troisième pression. La pression de fluide dans ladite chambre 254 est alors insuffisante pour contrebalancer la sollicitation du dispositif de rappel 240, qui ainsi entraîne le déplacement de l'organe de support 162 vers sa position de verrouillage.

Lors de ce déplacement, la vis 176 entraîne avec elle l'écrou 178 et les rouleaux 194, lesquels ne sont plus maintenus immobiles en translation du fait de la perte d'alimentation du vérin de commande 74. Les aubes 56 pivotent donc légèrement vers les petits pas, jusqu'à ce que la surface de butée 186 de la vis 176 vienne en appui contre le butoir 92 du bâti 72, bloquant la rotation de la vis 176 autour de l'axe longitudinal X et sa translation suivant le même axe X.

Le pivotement des aubes 56 vers les petits pas est alors empêché par le dispositif de verrouillage 160.

L'étape de verrouillage non-commandé est suivie d'une étape de mise en sécurité de la soufflante 50. Lors de cette étape, le circuit de secours 134 est activé et alimente la première chambre fluidique 112 en fluide de commande de manière à augmenter la pression fluidique dans cette chambre. Sous l'effet de cette augmentation de pression, la partie mobile 102 se déplace dans le deuxième sens, entraînant avec elle la vis 176 et l'organe de support 162, qui retrouve sa position de fonctionnement. La partie mobile 102 n'est donc plus immobilisée et peut continuer de se déplacer vers l'aval jusqu'à ce que les aubes 56 se retrouvent en position drapeau.

On notera que ces différentes étapes peuvent être mises en œuvre indépendamment les unes des autres.

Ainsi, grâce aux exemples de réalisation décrits ci-dessus, il est possible de faire l'économie d'un support disposé en amont du dispositif de verrouillage 160, ce qui facilite l'accès au mécanisme de changement de pas 70, et plus particulièrement au système de liaison 78, une fois qu'il est assemblé.

De plus, le montage du mécanisme de changement de pas 70 est facilité, et son coût réduit.

Par ailleurs, il est possible d'alléger le mécanisme de changement de pas 70 grâce à la compacité du vérin de commande 74 et à l'utilisation d'organes de liaison 148 moins résistants et donc plus légers.

Les exemples de réalisation décrits ci-dessus permettent encore de s'affranchir de l'utilisation d'un écrou de verrouillage distinct de l'écrou 178 du système vis-écrou 164. Il en résulte un dispositif de verrouillage 160 et, de ce fait, un mécanisme de changement de pas 70 dont la fabrication est simplifiée, les coûts réduits et la fiabilité augmentée.

Ces exemples de réalisation permettent enfin une grande précision dans le pilotage de l'angle de calage des aubes 56, ce qui autorise sur le moyeu 55 l'implantation rapprochée d'aubes 56 de grande taille et à géométrie complexe, permettant ainsi d'augmenter l'efficacité de la turbomachine 12.

## Revendications

1. Mécanisme de changement de pas (70) pour ajuster une position angulaire d'au moins une aube à calage variable (56) autour d'un axe (P) de pivotement de l'aube (56), ledit mécanisme de changement de pas (70) comprenant :
- un bâti (72) fixe relativement à l'axe de pivotement (P),
- un vérin de commande (74) comportant une partie fixe (100) solidaire du bâti (72) et une partie mobile (102) mobile en translation suivant un axe longitudinal (X) relativement à la partie fixe (100) entre une position rétractée et une position déployée, la partie mobile (102) s'étendant autour de la partie fixe (100),
- un système de liaison (78) reliant la partie mobile (102) à l'aube à calage variable (56) de sorte à convertir la translation de la partie mobile (102) suivant l'axe longitudinal (X) en une rotation de l'aube à calage variable (56) autour de l'axe de pivotement (P), et
- un dispositif de verrouillage de pas (160) propre à bloquer la translation de la partie mobile (102) relativement à la partie fixe (100) dans au moins un sens,
dans lequel le dispositif de verrouillage de pas (160) est longitudinalement en porte-à-faux relativement au bâti (72),
**caractérisé en ce que** le vérin de commande (74) comprend un cylindre (104) formant la partie mobile (102) et un piston (106) formant la partie fixe (100).

2. Mécanisme de changement de pas (70) selon la revendication 1, dans lequel le dispositif de verrouillage de pas (160) comprend :
- un organe de support (162), mobile en translation relativement au bâti (72) suivant l'axe longitudinal (X) entre une position de fonctionnement et une position de verrouillage,
- un système de guidage (172) guidant l'organe de support (162) relativement au bâti (72),
- un dispositif de rappel (240) sollicitant l'organe de support (162) vers sa position de verrouillage,
- un dispositif de maintien (242) pour maintenir l'organe de support (162) dans sa position de fonctionnement en conditions normales de fonctionnement, et
- un système vis-écrou (164) avec :
• une vis (176) solidaire en translation de l'organe de support (162) et montée mobile en rotation autour de l'axe longitudinal (X) relativement à l'organe de support (162), la vis (176) présentant une surface de butée (186) qui est à distance du bâti (72) lorsque l'organe de support (162) est en position de fonctionnement et en appui contre le bâti (72) lorsque l'organe de support (162) est en position de verrouillage, et
• un écrou (178) solidaire de la partie mobile (102) du vérin et coaxial à la vis (176), l'écrou (178) coopérant avec la vis (176) de sorte qu'une translation de l'écrou (178) suivant l'axe longitudinal (X) entraîne la rotation de la vis (176) autour de l'axe longitudinal (X).

3. Mécanisme de changement de pas (70) selon la revendication 2, dans lequel le vérin de commande (74) et le système de guidage (172) sont disposés longitudinalement d'un même côté, de préférence un côté aval, de l'écrou (178).

4. Mécanisme de changement de pas (70) selon la revendication 2 ou 3, comprenant un dispositif (220) de guidage de l'écrou (178) relativement au bâti (72), ledit dispositif de guidage (220) comportant un cylindre interne (222) solidaire de l'écrou (178) et un cylindre externe (224) solidaire du bâti (72), le cylindre interne (222) coopérant avec le cylindre externe (224) de manière à coulisser longitudinalement à l'intérieur de ce dernier.

5. Mécanisme de changement de pas (70) selon l'une quelconque des revendications 2 à 4, dans lequel le dispositif de verrouillage de pas (160) comprend un carter (230) solidaire de l'écrou (178) et entourant l'écrou (178), la vis (176) et l'organe de support (162).

6. Mécanisme de changement de pas (70) selon l'une quelconque des revendications précédentes, dans lequel le cylindre (104) délimite une cavité interne (110) et le piston (106) divise ladite cavité interne (110) en deux chambres fluidiques (112, 114) contenant chacune un fluide de commande pour commander le déplacement de la partie mobile (102) relativement à la partie fixe (100).

7. Mécanisme de changement de pas (70) selon les revendications 5 et 6 prises ensemble, dans lequel l'une des deux chambres fluidiques (112, 114) est en communication fluidique avec l'intérieur du carter (230), le fluide de commande constituant un fluide de lubrification du dispositif de verrouillage (160).

8. Rotor de soufflante (54) pour turbomachine comprenant un moyeu (55) et une pluralité d'aubes à calage variable (56) chacune pivotable relativement au moyeu (55) autour d'un axe de pivotement (P) propre, le rotor (54) comprenant en outre un mécanisme de changement de pas (70) selon l'une quelconque des revendications précédentes pour ajuster une position angulaire de chacune des aubes à calage variable (56) autour de son axe de pivotement (P) respectif.

9. Turbomachine (12) comprenant un rotor de soufflante (54) selon la revendication 8.

10. Aéronef (10) comprenant au moins une turbomachine (12) selon la revendication 9.

11. Procédé de changement du pas des aubes (56) d'un rotor de soufflante (54) pour turbomachine, chacune pivotable relativement à un moyeu (55) du rotor de soufflante (54) autour d'un axe de pivotement (P) propre, ledit procédé comprenant l'ajustement d'une position angulaire de chacune desdites aubes (56) autour de son axe de pivotement (P) respectif au moyen d'un mécanisme de changement de pas (70) selon l'une quelconque des revendications 1 à 7.

## Patentansprüche

1. Blattverstellungsmechanismus (70) zum Anpassen einer Winkelposition mindestens einer Schaufel (56) mit variabler Einstellung um eine Schwenkachse (P) der Schaufel (56), wobei der Blattverstellungsmechanismus (70) umfasst:
- ein Gestell (72), das in Bezug auf die Schwenkachse (P) fest ist,
- einen Steuerzylinder (74), der einen festen Teil (100), der fest mit dem Gestell (72) verbunden ist, und einen beweglichen Teil (102) umfasst, der translatorisch entlang einer Längsachse (X) in Bezug auf den festen Teil (100) zwischen einer eingefahrenen Position und einer ausgefahrenen Position beweglich ist, wobei der bewegliche Teil (102) sich um den festen Teil (100) herum erstreckt,
- ein Verbindungssystem (78), das den beweglichen Teil (102) derart mit der Schaufel (56) mit variabler Einstellung verbindet, dass die Translation des beweglichen Teils (102) entlang der Längsachse (X) in eine Drehung der Schaufel (56) mit variabler Einstellung um die Schwenkachse (P) umgewandelt wird, und
- eine Blattverstellungsverriegelungsvorrichtung (160), die dazu geeignet ist, die Translation des beweglichen Teils (102) in Bezug auf den festen Teil (100) in mindestens einer Richtung zu blockieren,
wobei die Blattverstellungsverriegelungsvorrichtung (160) in Bezug auf das Gestell (72) längs freitragend ist,
**dadurch gekennzeichnet, dass** der Steuerzylinder (74) einen Zylinder (104), der den beweglichen Teil (102) bildet, und einen Kolben (106) umfasst, der den festen Teil (100) bildet.

2. Blattverstellungsmechanismus (70) nach Anspruch 1, wobei die Blattverstellungsverriegelungsvorrichtung (160) umfasst:
- ein Stützorgan (162), das in Bezug auf das Gestell (72) entlang der Längsachse (X) zwischen einer Betriebsposition und einer Verriegelungsposition translatorisch beweglich ist,
- ein Führungssystem (172), das das Stützorgan (162) in Bezug auf das Gestell (72) führt,
- eine Rückstellvorrichtung (240), die das Stützorgan (162) hin zu seiner Verriegelungsposition beaufschlagt,
- eine Haltevorrichtung (242) zum Halten des Stützorgans (162) in seiner Betriebsposition unter normalen Betriebsbedingungen, und
- ein Schrauben-Mutter-System (164) mit:
• einer Schraube (176), die translatorisch fest mit dem Stützorgan (162) verbunden ist und drehbeweglich um die Längsachse (X) in Bezug auf das Stützorgan (162) gelagert ist, wobei die Schraube (176) eine Anschlagoberfläche (186) aufweist, die sich in einem Abstand von dem Gestell (72) befindet, wenn das Stützorgan (162) sich in der Betriebsposition befindet, und gegen das Gestell (72) aufliegt, wenn das Stützorgan (162) sich in der Verriegelungsposition befindet, und
• eine Mutter (178), die fest mit dem beweglichen Teil (102) des Zylinders verbunden und koaxial zur Schraube (176) ist, wobei die Mutter (178) derart mit der Schraube (176) zusammenwirkt, dass eine Translation der Mutter (178) entlang der Längsachse (X) die Drehung der Schraube (176) um die Längsachse (X) verursacht.

3. Blattverstellungsmechanismus (70) nach Anspruch 2, wobei der Steuerzylinder (74) und das Führungssystem (172) längs auf einer selben Seite, vorzugsweise einer stromabwärtigen Seite, der Mutter (178) angeordnet sind.

4. Blattverstellungsmechanismus (70) nach Anspruch 2 oder 3, der eine Führungsvorrichtung (220) zur Führung der Mutter (178) in Bezug auf das Gestell (72) umfasst, wobei die Führungsvorrichtung (220) einen inneren Zylinder (222), der fest mit der Mutter (178) verbunden ist, und einen äußeren Zylinder (224) umfasst, der fest mit dem Gestell (72) verbunden ist, wobei der innere Zylinder (222) derart mit dem äußeren Zylinder (224) zusammenwirkt, dass er längs im Inneren dieses letzteren gleitet.

5. Blattverstellungsmechanismus (70) nach einem der Ansprüche 2 bis 4, wobei die Blattverstellungsverriegelungsvorrichtung (160) ein Gehäuse (230) umfasst, das fest mit der Mutter (178) verbunden ist und die Mutter (178), die Schraube (176) und das Stützorgan (162) umgibt.

6. Blattverstellungsmechanismus (70) nach einem der vorhergehenden Ansprüche, wobei der Zylinder (104) einen inneren Hohlraum (110) abgrenzt und der Kolben (106) den inneren Hohlraum (110) in zwei Fluidkammern (112, 114) unterteilt, die jeweils ein Steuerfluid zum Steuern der Verlagerung des beweglichen Teils (102) in Bezug auf den festen Teil (100) enthalten.

7. Blattverstellungsmechanismus (70) nach Anspruch 5 und 6 zusammen, wobei eine der zwei Fluidkammern (112, 114) in Fluidverbindung mit dem Inneren des Gehäuses (230) steht, wobei das Steuerfluid ein Schmierfluid der Verriegelungsvorrichtung (160) bildet.

8. Fan-Rotor (54) für Turbomaschine, der eine Nabe (55) und eine Vielzahl von Schaufeln (56) mit variabler Einstellung umfasst, die jeweils in Bezug auf die Nabe (55) um eine eigene Schwenkachse (P) schwenkbar sind, wobei der Rotor (54) ferner einen Blattverstellungsmechanismus (70) nach einem der vorhergehenden Ansprüche zum Anpassen einer Winkelposition von jeder der Schaufeln (56) mit variabler Einstellung um ihre jeweilige Schwenkachse (P) umfasst.

9. Turbomaschine (12), die einen Fan-Rotor (54) nach Anspruch 8 umfasst.

10. Luftfahrzeug (10), das mindestens eine Turbomaschine (12) nach Anspruch 9 umfasst.

11. Verfahren zur Blattverstellung der Schaufeln (56) eines Fan-Rotors (54) für eine Turbomaschine, die jeweils in Bezug auf eine Nabe (55) des Fan-Rotors (54) um eine eigene Schwenkachse (P) schwenkbar sind, wobei das Verfahren das Anpassen einer Winkelposition von jeder der Schaufeln (56) um ihre jeweilige Schwenkachse (P) mittels eines Blattverstellungsmechanismus (70) nach einem der Ansprüche 1 bis 7 umfasst.

## Claims

1. A pitch change mechanism (70) for adjusting an angular position of at least one variable-setting blade (56) about a pivot axis (P) of the blade (56), said pitch change mechanism (70) comprising:
- a frame (72) fixed relative to the pivot axis (P),
- a control actuator (74) including a fixed part (100) secured to the frame (72) and a movable part (102) movable in translation along a longitudinal axis (X) relative to the fixed part (100) between a retracted position and a deployed position, the movable part (102) extending around the fixed part (100),
- a connection system (78) connecting the movable part (102) to the variable-setting blade (56) so as to convert the translation of the movable part (102) along the longitudinal axis (X) into a rotation of the variable-setting blade (56) about the pivot axis (P), and
- a pitch locking device (160) suitable for blocking the translation of the movable part (102) relative to the fixed part (100) in at least one way,
wherein the pitch locking device (160) is longitudinally cantilevered relative to the frame (72),
**characterized in that** the control actuator (74) comprises a cylinder (104) forming the movable part (102) and a piston (106) forming the fixed part (100).

2. The pitch change mechanism (70) according to claim 1, wherein the pitch locking device (160) comprises:
- a support member (162), movable in translation relative to the frame (72) along the longitudinal axis (X) between an operating position and a locking position,
- a guide system (172) guiding the support member (162) relative to the frame (72),
- a return device (240) biasing the support member (162) towards its locking position,
- a holding device (242) for holding the support member (162) in its operating position under normal operating conditions, and
- a screw-nut system (164) with:
• a screw (176) secured in translation to the support member (162) and movably mounted in rotation about the longitudinal axis (X) relative to the support member (162), the screw (176) having an abutment surface (186) which is at a distance from the frame (72) when the support member (162) is in the operating position and bearing against the frame (72) when the support member (162) is in the locking position, and
• a nut (178) secured to the movable part (102) of the actuator and coaxial with the screw (176), the nut (178) cooperating with the screw (176) so that a translation of the nut (178) along the longitudinal axis (X) causes the rotation of the screw (176) about the longitudinal axis (X).

3. The pitch change mechanism (70) according to claim 2, wherein the control actuator (74) and the guide system (172) are disposed longitudinally on the same side, preferably a downstream side, of the nut (178).

4. The pitch change mechanism (70) according to claim 2 or 3, comprising a device (220) for guiding the nut (178) relative to the frame (72), said guide device (220) including an inner cylinder (222) secured to the nut (178) and an outer cylinder (224) secured to the frame (72), the inner cylinder (222) cooperating with the outer cylinder (224) so as to slide longitudinally inside the latter.

5. The pitch change mechanism (70) according to any one of claims 2 to 4, wherein the pitch locking device (160) comprises a casing (230) secured to the nut (178) and surrounding the nut (178), the screw (176) and the support member (162).

6. The pitch change mechanism (70) according any one of the preceding claims, wherein the cylinder (104) delimits an inner cavity (110) and the piston (106) divides said inner cavity (110) into two fluid chambers (112, 114) each containing a control fluid to control the displacement of the movable part (102) relative to the fixed part (100).

7. The pitch change mechanism (70) according to claims 5 and 6 taken together, wherein one of the two fluid chambers (112, 114) is in fluid communication with the interior of the casing (230), the control fluid constituting a lubricating fluid for the locking device (160).

8. A fan rotor (54) for a turbomachine comprising a hub (55) and a plurality of variable-setting blades (56) each pivotable relative to the hub (55) about an own pivot axis (P), the rotor (54) further comprising a pitch change mechanism (70) according to any one of the preceding claims to adjust an angular position of each of the variable-setting blades (56) about its respective pivot axis (P).

9. A turbomachine (12) comprising a fan rotor (54) according to claim 8.

10. An aircraft (10) comprising at least one turbomachine (12) according to claim 9.

11. A method for changing the pitch of the blades (56) of a fan rotor (54) for a turbomachine, each pivotable relative to a hub (55) of the fan rotor (54) about an own pivot axis (P), said method comprising the adjustment of an angular position of each of said blades (56) about its respective pivot axis (P) by means of a pitch change mechanism (70) according to any one of claims 1 to 7.
